(19) Europäisches Patentamt
European Patent Office
Office européen des brevets

(11) EP 0 703 261 B1

(12) **EUROPÄISCHE PATENTSCHRIFT**

(45) Veröffentlichungstag und Bekanntmachung des Hinweises auf die Patenterteilung:
**10.03.1999 Patentblatt 1999/10**

(51) Int Cl.[6]: **C08G 64/30**

(21) Anmeldenummer: **95114358.5**

(22) Anmeldetag: **13.09.1995**

(54) **Verfahren zur Herstellung von thermoplastischem Polycarbonat**

Process for the preparation of thermoplastic polycarbonates

Procédé pour la préparation de polycarbonate thermoplastique

(84) Benannte Vertragsstaaten:
**BE DE ES FR GB NL**

(30) Priorität: **26.09.1994 DE 4434316**

(43) Veröffentlichungstag der Anmeldung:
**27.03.1996 Patentblatt 1996/13**

(73) Patentinhaber: **BAYER AG**
**51368 Leverkusen (DE)**

(72) Erfinder:
- **Kühling, Steffen, Dr.**
  **D-40670 Meerbusch (DE)**
- **Alewelt, Wolfgang, Dr.**
  **F-47809 Krefeld (DE)**
- **Wolf, Udo, Dr.**
  **D-47906 Kempen (DE)**

(56) Entgegenhaltungen:
**EP-A- 0 481 296** **DE-A- 4 238 123**
**DE-A- 4 240 314**

- **CHEMICAL ABSTRACTS, vol. 116, no. 8, 24. Februar 1992, Columbus, Ohio, US; abstract no. 60254, & JP-A-3 252 421 (ASAHI CHEMICAL IND. CO., LTD.) 11. November 1991**
- **CHEMICAL ABSTRACTS, vol. 121, no. 20, 14. November 1994, Columbus, Ohio, US; abstract no. 231665, & JP-A-6 122 758 (ASAHI CHEMICAL IND.) 6. Mai 1994**
- **DATABASE WPI Week 9443, Derwent Publications Ltd., London, GB; AN 94-347191 & JP-A-6 271 659 (ASAHI KASEI KOGYO KK) 27. September 1994**

EP 0 703 261 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Gegenstand der vorliegenden Erfindung ist ein Verfahren zur Herstellung von thermoplastischem, aromatischem Polycarbonat in der Schmelze, ausgehend von einer aromatischen Dihydroxyverbindung und einem Kohlensäurediarylester, das dadurch gekennzeichnet ist, daß bei dem intermediär gebildeten Oligocarbonaten des OH/Arylcarbonat-Endgruppenverhältnis durch geeignete Messung erfaßt, anschließend durch Nachdosierung von aromatischen Dihydroxyverbindungen oder von Kohlensäurediarylestern ein bestimmtes OH/Arylcarbonat-Endgruppenverhältnis, im Bereich von OH-Endgruppen > 25 % bis < 50 %, eingestellt und dieses so eingestellte Oligocarbonat dann in 2 bis 150 Minuten zum gewünschten Polycarbonat aufkondensiert wird.

Die nach dem erfindungsgemäßen Verfahren hergestellten Polycarbonate sind lösungsmittelfrei, mit heller Eigenfarbe ausgestattet und verzweigungsarm.

Die Herstellung von aromatischen Oligo-/Polycarbonaten nach dem Schmelzeumesterungsverfahren ist literaturbekannt.

In der DE-OS 4 238 123 (Le A 29 275) wird auf die Bedeutung der Endgruppenverhältnisse der Oligocarbonate eingegangen, um zu verzweigungsarmen Polycarbonaten zu gelangen.

Die Einstellung beziehungsweise Einhaltung des OH/Arylcarbonat-Endgruppenverhältnisses im oben genannten Bereich ist sehr diffiziell und schwierig und wird durch geringe Schwankungen (Einwägegenauigkeit) in der Ausgangsstöchiometrie der aromatischen Dihydroxyverbindung und des Kohlensäurediesters und Destillationsverluste des Kohlensäurediesters bei der Abdestillation des Spaltprodukts (Monophenol) stark beeinflußt, so daß eine Regelung für einen Prozeß, insbesondere für einen kontinuierlichen Prozeß, notwendig ist.

Es wurde nun gefunden, daß diese Regelung erreicht werden kann, indem man die OH/Arylcarbonat-Endgruppenverhältnisses des Oligocarbonats bestimmt und die entsprechend fehlende Komponente, also die aromatische Dihydroxyverbindung oder den Kohlensäurediester gegebenenfalls nachdosiert, so daß sichergestellt ist, daß das OH/Arylcarbonat-Endgruppenverhältnis, im Bereich von OH-Endgruppen > 25 % bis < 50 %, eingestellt ist.

Es wurde darüber hinaus gefunden, daß zur Erreichung einer hohen Polykondensationsgeschwindigkeit bei der Herstellung von verzweigungsarmen Polycarbonaten die Einhaltung des OH/Arylcarbonat-Endgruppenverhältnisses der Oligocarbonate notwendig ist.

Für das erfindungsgemäße Verfahren geeignete Diphenole sind solche der Formel (2):

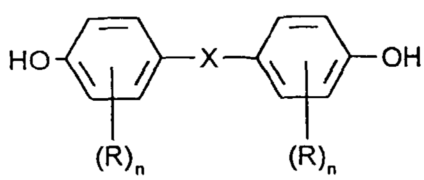

(2)

worin

X = $C_1$ - $C_8$ Alkyliden oder Cycloalkyliden, S oder eine Einfachbindung,

R = $CH_3$, Cl oder Br und n = Null, 1 oder 2 sind.

Bevorzugte Diphenole sind z.B.:

4,4'-Dihydroxydiphenyl,
4,4'-Dihydroxydiphenylsulfid,
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
1,1-Bis-(4-hydroxyphenyl)-3,3,5-trimethylcyclohexan.

Besonders bevorzugte Diphenole aus den vorstehend genannten sind 2,2-Bis(4-hydroxyphenyl)-propan und 1,1-Bis-(4-hydroxyphenyl)-3,3,5-trimethylcyclohexan.

Die vorstehenden Diphenole können zur Herstellung von Homopolymeren oder Copolymeren eingesetzt werden.

Die Polycarbonate können durch den Einsatz geringer Mengen Verzweiger bewußt und kontrolliert verzweigt werden. Einige geeignete Verzweiger sind:

Phloroglucin,

4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-[4,4-bis-(4-hydroxyphenyl)-cyclohexyl]-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-orthoterephthalsäureester,
Tetra-(4-hydroxyphenyl)-methan,
Tetra-(4-(4-hydroxyphenyl-isopropyl)-phenoxy)-methan,
1,4-Bis-(4',4"-dihydroxytriphenyl)-methyl)-benzol und insbesondere
$\alpha,\alpha,\alpha''$-Tris-(4-hydroxyphenyl)-1,3,5-triisopropylbenzol.

Weitere mögliche Verzweiger sind 2,4-Dihydroxybenzoesäure, Trimesinsäure, Cyanurchlorid und 3,3-Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern, können mit den Diphenolen zusammen eingesetzt werden.

Kohlensäurediarylester im Sinne vorliegender Erfindung sind Di-$C_6$-$C_{18}$-Arylester, vorzugsweise die Diester von Phenol oder alkylsubstituierten Phenolen, also Diphenylcarbonat oder z.B. Dikresylcarbonat. Bezogen auf 1 Mol Bisphenol werden die Kohlensäurediester in 1,01 bis 1,30 Mol, bevorzugt in 1,02 bis 1,15 Mol eingesetzt.

Es ist darauf zu achten, daß die Reaktionskomponenten, also die Diphenole und die Kohlensäurediarylester frei von Alkali- und Erdalkaliionen sind, wobei Mengen von kleiner 0,01 ppm an Alkali- und Erdalkaliionen toleriert werden können. Derart reine Kohlensäurediarylester beziehungsweise Diphenole sind erhältlich, indem man die Kohlensäurediarylester beziehungsweise Diphenole umkristallisiert, wäscht und/oder destilliert. Beim erfindungsgemäßen Verfahren soll der Gehalt an Alkali- und Erdalkalimetallionen sowohl im Diphenol als auch im Kohlensäurediester einen Wert von < 0,01 ppm betragen.

Die Umesterungsreaktion der aromatischen Dihydroxyverbindung und des Kohlensäurediester in der Schmelze des erfindungsgemäßen Verfahrens wird in zwei Stufen durchgeführt. In der 1. Stufe findet das Aufschmelzen der aromatischen Dihydroxyverbindung und des Kohlensäurediester bei Temperaturen von 80 - 250 °C, bevorzugt 100 - 230 °C, besonders bevorzugt 120 - 190 °C unter normalem Druck in 0 - 5 Stunden, bevorzugt 0,25 - 3 Stunden statt. Nach Zugabe des Katalysators wird durch Anlegen von Vakuum (bis zu 2,7 mbar) und Erhöhung der Temperatur (auf bis zu 260 °C) durch Abdestillieren des Monophenols das Oligocarbonat aus der aromatischen Dihydroxyverbindung und dem Kohlensäurediester hergestellt. Das so hergestellte Oligocarbonat hat eine mittlere Gewichtsmittelmolmasse $\overline{M}_w$ (ermittelt durch Messung der rel. Lösungsviskosität in Dichlormethan oder in Mischungen gleicher Gewichtsmengen Phenol/o-Dichlorbenzol geeicht durch Lichtstreuung) im Bereich von 2 000 bis 18 000 bevorzugt von 4 000 bis 15 000 und ein OH-Endgruppengehalt von

$$X\,\% = \frac{\text{Zahl der OH-Endgruppen}}{\text{Gesamtzahl der Endgruppen}} * 100,$$

der von > 25 % bis < 50 %, vorzugsweise von > 30 % bis < 45 % beträgt.

Die Bestimmung des OH/Arylcarbonat-Endgruppenverhältnis der Oligocarbonate erfolgt durch IR-Messung eines Schmelzefilms, bevorzugt durch on-line IR-Messung der OH- und Phenyl-Endgruppen.

Jetzt wird bei einem Unterschuß an OH-Endgruppen die entsprechende Dihydroxyverbindung und bei einem Überschuß an OH-Endgruppen der entsprechende Kohlensäurediester in die Schmelze zudosiert.

Die Zudosierung der aromatischen Dihydroxyverbindung und des Kohlensäurediester zum Oligocarbonat kann durch kontinuierliche, beispielsweise mittels Zahnradpumpe oder durch diskontinuierliche Zudosierung erfolgen. Es ist vorteilhaft, nach der Zudosierung eine Verweilzeit zur Umesterung mit dem Oligocarbonat zu gewähren, beispielsweise in einem Verweilrohr oder in einem statischen Mischer, da ansonsten die aromatische Dihydroxyverbindung-beziehungsweise der Kohlensäurediester durch das angelegte Vakuum direkt wieder entfernt werden könnte.

Die Molekulargewichte der Oligocarbonate der 1. Stufe richten sich danach, wie die gewünschte Endviskosität der Polycarbonate sein soll; so werden durch die Kondensation von niedrigmolekularen Oligocarbonaten niedrigmolekulare Polycarbonate in der 2. Stufe erhalten und durch die Kondensation von höhermolekularen Oligocarbonaten höhermolekulare Polycarbonate erhalten. Es kann vorteilhaft sein, die Oligocarbonate nach der ersten Stufe zu isolieren und danach in die 2. Stufe zu gehen.

In der 2. Stufe wird bei der Polykondensation durch weiteres Erhöhen der Temperatur auf 250 - 320 °C, bevorzugt 270 - 295 °C und einem Druck von < 2,7 mbar das verzweigungsarme Polycarbonat in 2 Minuten bis 150 Minuten, vorzugsweise in 20 Minuten bis 90 Minuten und besonders bevorzugt in 30 Minuten bis 60 Minuten hergestellt.

Katalysatoren im Sinne des erfindungsgemäßen Verfahren sind alle anorganische oder organischen basischen Verbindungen beispielsweise: Lithium-, Natrium-, Kalium-, Cäsium-, Calzium-, Barium-, Magnesium-, -hydroxide, -carbonate, -halogenide, -phenolate, -diphenolate, -fluoride, -acetate, -phosphate, -hydrogenphosphate, boranate, Stickstoff- und Phosphorbasen, wie beispielsweise Tetramethylammoniumhydroxid, Tetramethylammoniumacetat, Tetramethylammoniumfluorid, Tetramethylammoniumtetraphenylboranat, Tetraphenylphosphoniumfluorid, Tetraphenylphosphoniumtetraphenylboranat, Dimethyldiphenylammoniumhydoxid, Tetraethylammoniumhydroxid, DBU, DBN oder Guanidinsysteme wie beispielsweise das 1,5,7-Triazabicyclo-[4,4,0]-dec-5-en, 7-Phenyl-1,5,7-triazabicyclo-[4,4,0]-dec-5-en, 7-Methyl-1,5,7-triazabicyclo-[4,4,0]-dec-5-en, 7,7'-Hexyliden-di-1,5,7-triazabicyclo-[4,4,0]-dec-5-en, 7,7'-Decyliden-di-1,5,7-triazabicyclo-[4,4,0]-dec-5-en, 7,7'-Dodecyliden-di-1,5,7-triazabicydo-[4,4,0]-dec-5-en oder Phosphazene wie beispielsweise das Phosphazen-Base $P_1$-t-Oct = tert.-Octyl-imino-tris-(dimethylamino)-phosphoran, Phosphazen-Base $P_1$-t-Butyl = tert.-Butyl-imino-tris-(dimethylamino)-phosphoran, BEMP = 2-tert.-Butylimino-2-diethylamino-1,3-dimethyl-perhydro-1,3-diaza-2-phosphorin.

Diese Katalysatoren werden in Mengen von $10^{-2}$ bis $10^{-8}$ Mol, bezogen auf 1 Mol Diphenol, eingesetzt.

Die Katalysatoren können auch in Kombination (zwei oder mehrere) miteinander eingesetzt werden.

Beim Einsatz von Alkali-/Erdalkalimetallkatalysatoren kann es vorteilhaft sein, die Alkali-/Erdalkalimetallkatalysatoren zu einem späteren Zeitpunkt zuzusetzen, beispielsweise nach der Oligocarbonatsynthese bei der Polykondensation in der 2. Stufe. Die Zugabe des Alkali-/Erdalkalimetallkatalysators kann beispielsweise als Feststoff oder als Lösung in Wasser, Phenol, Oligocarbonat, Polycarbonat erfolgen. Die Mitverwendung von Alkali- beziehungsweise Erdalkalimetallkatalysatoren widerspricht nicht der vorstehend erwähnten Forderung nach Reinheit der Reaktionspartner.

Die Reaktion der aromatischen Dihydroxyverbindung und des Kohlensäurediester zum Polycarbonat kann im Sinne des erfindungsgemäßen Verfahrens diskontinuierlich oder bevorzugt kontinuierlich durchgeführt werden, beispielsweise in Rührkesseln, Dünnschichtverdampfern, Fallfilmverdampfern, Rührkesselkaskaden, Extrudern, Knetern, einfachen Scheibenreaktoren und Hochviskosscheibenreaktoren.

Die aromatischen Polycarbonate des erfindungsgemäßen Verfahrens sollen mittlere Gewichtsmolmassen $\overline{M}_w$ von 18 000 bis 200 000 vorzugsweise 19 000 bis 60 000 haben, ermittelt durch Messung der rel. Lösungsviskosität in Dichlormethan oder in Mischungen gleicher Gewichtsmengen Phenol/o-Dichlorbenzol geeicht durch Lichtstreuung.

Zur Begrenzung der mittleren Gewichtsmolmassen $M_w$ der Polymeren können in bekannter Weise (siehe EP 360 578) Molmassenregler, wie beispielsweise Alkylphenol, in den berechneten Mengen eingesetzt werden.

Zur Verbesserung der Eigenschaften können den erfindungsgemäß hergestellten Polycarbonaten Hilfs- und Verstärkungsstoffe zugemischt werden. Als solche u.a. in Betracht zu ziehen: Stabilisatoren, Fließhilfsmittel, Entformungsmittel, Brandschutzmittel, Pigmente, fein zerteilte Mineralien, Faserstoffe, z.B. Alkyl- und Arylphosphite, -phosphate, -phosphane, Säuren, Epoxide, niedermolekulare Carbonsäureester, Halogenverbindungen, Salze, Kreide, Quarzmehl, Glas- und Kohlenstoffasern.

Weiterhin können den erfindungsgemäßen Polycarbonaten auch andere Polymere zugemischt werden, z.B. Polyolefine, Polyurethane, Polystyrol.

Der Zusatz dieser Stoffe erfolgt, vorzugsweise auf herkömmlichen Aggregaten zum fertigen Polycarbonat, kann jedoch, je nach den Erfordernissen, auf einer anderen Stufe des erfindungsgemäßen Verfahrens erfolgen.

Darüber hinaus ist für besondere Anwendungen auch die Modifizierung der Polycarbonate durch Einkondensation von Blöcken, Segmenten und Comonomeren möglich, z.B. von Siloxanblöcken mit OH-Endgruppen, von aromatischen und aliphatischen Polyestern mit OH- und Carbonsäure-Endgruppen, von Polyphenylensulfid-Blöcken mit OH-Endgruppen und von Polyphenylenoxid-Blöcken mit OH-Endgruppen.

Die erfindungsgemäß hergestellten Polycarbonate eignen sich für die üblichen Anwendungsgebiete, also in der Elektrotechnik, im Bausektor und im Kraftfahrzeugbau somit beispielsweise als Trägermaterial für Datenspeicher, für Stegplatten zur Abdeckung oder als Gehäusematerial von elektronischen Geräten.

**Beispiele**

**Vergleichsbeispiel 1**

In einem 500 ml Dreihalskolben mit Rührer, Innenthermometer und Vigreuxkolonne (30 cm, verspiegelt) mit Brücke werden 114,15 g (0,500 Mol) Bisphenol-A und 115,68 g (0,540 Mol) Diphenylcarbonat eingewogen. Die Apparatur wird durch Anlegen von Vakuum und Spülen mit Stickstoff (dreimal) vom Luftsauerstoff befreit und das Gemisch auf 150°C aufgeheizt. Jetzt werden 0,0007 ($1*10^{-3}$ Mol-%) Triazabicyclo-[4,4,0]-dec-5-en, bezogen auf Bisphenol-A, als 1 %ige wäßrige Lösung zugegeben und das entstehende Phenol bei 100 mbar abdestilliert. Gleichzeitig wird die Temperatur bis auf 250 °C gesteigert. Nach 1 Stunde wird das Vakuum auf 10 mbar verbessert und anschließend auf 2 mbar. Das intermediär gebildete Oligocarbonat weist ein OH: Arylcarbonat-Endgruppenverhältnis (gemessen über IR; hierzu wurde das Transmissionsspektrum eines ca. 100 µm dicken, durch Heißverpressen bei einer Temperatur von 240 °C hergestellten Films, aufgenommen, ein Spektrum eines Octylphenylendgruppen terminiertes Polycarbonat mit vergleichbarer Schichtdicke substrahiert und nach Kalibrierung aus der basislinienkorregierten Extinktion des Differenzspektrums bei 3 490 $cm^{-1}$ die Konzentration der OH-Endgruppen und aus der Extinktion bei 688 $cm^{-1}$ die Konzentration der Arylcarbonat-Endgruppen bestimmt) von 10:90 und eine rel. Lösungsviskosität von 1,150 (Dichlormethan, 25 °C, 5 g/l) auf. Durch Absenken des Vakuums auf 0,5 mbar und Temperaturerhöhung auf 290 °C wird innerhalb von 180 min ein lösungsmittelfreies Polycarbonat mit einer rel. Lösungsviskosität von 1,210 (Dichlormethan, 25 °C, 5 g/l) erhalten. Der Gehalt an Verzweiger der Formel 3 im hergestellten Polycarbonat beträgt nach Totalverseifung des Polymeren und Bestimmung über HPLC 34 ppm.

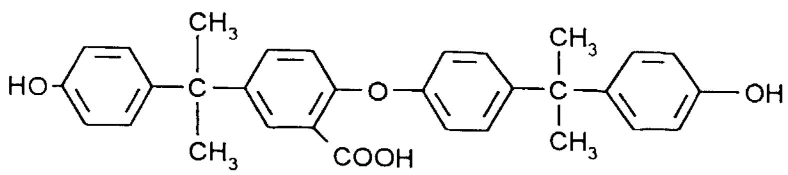

Formel 3

**Beispiel 1**

Wie Vergleichsbeispiel 1. Das intermediär gebildete Oligocarbonat weist ein OH:Arylcarbonat-Endgruppenverhältnis (gemessen über IR) von 16:84 und eine rel. Lösungsviskosität von 1,138 (Dichlormethan, 25 °C, 5 g/l) auf. Zu dieser Oligocarbonatschmelze werden nun 3,15 g Bisphenol-A zugegeben, so daß sich das OH/Arylcarbonat-Endgruppenverhältnis auf 45:65 verändert. Durch Absenken des Vakuums auf 0,5 mbar und Temperaturerhöhung auf 290 °C wird nun innerhalb von 20 min ein lösungsmittelfreies Polycarbonat mit nur einer rel. Lösungsviskosität von 1,280 (Dichlormethan, 25 °C, 5 g/l) erhalten. Der Gehalt an Verzweiger der Formel 3 im hergestellten Polycarbonat beträgt nach Totalverseifung des Polymeren und Bestimmung über HPLC 25 ppm.

**Vergleichsbeispiel 2**

Wie Vergleichsbeispiel 1, nur werden 0,001376 g ($1*10^{-3}$ Mol-%) BEMP = 2-tert.-Butylimino-2-diethylamino-1,3 -dimethyl-perhydro-1,3-diaza-2-phosphorin eingesetzt. Das intermediär gebildete Oligocarbonat weist ein OH:Arylcarbonat-Endgruppenverhältnis (gemessen über IR) von 18:82 und eine rel. Lösungsviskosität von 1,130 (Dichlormethan, 25 °C, 5 g/l) auf. Durch Absenken des Vakuums auf 0,5 mbar und Temperaturerhöhung auf 290 °C wird innerhalb von 180 min ein lösungsmittelfreies Polycarbonat mit nur einer rel. Lösungsviskosität von 1,196 (Dichlormethan, 25 °C, 5 g/l) erhalten. Der Gehalt an Verzweiger der Formel 3 im hergestellten Polycarbonat beträgt nach Totalverseifung des Polymeren und Bestimmung über HPLC 47 ppm.

**Beispiel 2**

Wie Vergleichsbeispiel 1. Das intermediär gebildete Oligocarbonat weist ein OH:Arylcarbonat-Endgruppenverhältnis (gemessen über IR) von 12:88 und eine rel. Lösungsviskosität von 1,145 (Dichlormethan, 25 °C, 5 g/l) auf. Zu dieser Oligocarbonatschmelze werden nun 3,15 g Bisphenol-A zugegeben, so daß sich das OH/Arylcarbonat-Endgruppenverhältnis auf 43:67 verändert. Durch Absenken des Vakuums auf 0,5 mbar und Temperaturerhöhung auf 290 °C wird nun innerhalb von 20 min ein lösungsmittelfreies Polycarbonat mit nur einer rel. Lösungsviskosität von 1,275 (Dichlormethan, 25 °C, 5 g/l) erhalten. Der Gehalt an Verzweiger der Formel 3 im hergestellten Polycarbonat beträgt nach Totalverseifung des Polymeren und Bestimmung über HPLC 18 ppm.

**Vergleichsbeispiel 3**

Wie Vergleichsbeispiel 1, nur werden anstatt 111,40 g (0,520 Mol) Diphenylcarbonat eingewogen. Das intermediär gebildete Oligocarbonat weist ein OH:Arylcarbonat-Endgruppenverhältnis (gemessen über IR) von 78:22 und eine rel. Lösungsviskosität von 1,149 (Dichlormethan, 25 °C, 5 g/l) auf. Durch Absenken des Vakuums auf 0,5 mbar und Temperaturerhöhung auf 290 °C wird innerhalb von 180 min ein lösungsmittelfreies Polycarbonat mit nur einer rel. Lösungsviskosität von 1,221 (Dichlormethan, 25 °C, 5 g/l) erhalten. Der Gehalt an Verzweiger der Formel 3 im hergestellten Polycarbonat beträgt nach Totalverseifung des Polymeren und Bestimmung über HPLC 35 ppm.

**Beispiel 3**

Wie Vergleichsbeispiel 3: Das intermediär gebildete Oligocarbonat weist ein OH:Arylcarbonat-Endgruppenverhältnis (gemessen über IR) von 87:13 und eine rel. Lösungsviskosität von 1,149 (Dichlormethan, 25 °C, 5 g/l) auf. Zu dieser Oligocarbonatschmelze werden nun 3,62 g Diphenylcarbonat zugegeben, so daß sich das OH/Arylcarbonat-Endgruppenverhältnis auf 44:66 verändert. Durch Absenken des Vakuums auf 0,5 mbar und Temperaturerhöhung auf 290 °C wird nun innerhalb von 20 min ein lösungsmittelfreies Polycarbonat mit nur einer rel. Lösungsviskosität von 1,282 (Dichlormethan, 25 °C, 5 g/l) erhalten. Der Gehalt an Verzweiger der Formel 3 im hergestellten Polycarbonat beträgt nach Totalverseifung des Polymeren und Bestimmung über HPLC 25 ppm.

## Patentansprüche

1. Verfahren zur Herstellung von thermoplastischen, aromatischen Polycarbonaten in der Schmelze, ausgehend von einer aromatischen Dihydroxyverbindung und einem Kohlensäurediarylester, dadurch gekennzeichnet, daß bei den intermediär gebildeten Oligocarbonaten das OH/Arylcarbonat-Endgruppenverhältnis durch IR-Messung erfaßt, anschließend durch Nachdosierung von aromatischen Dihydroxyverbindungen oder von Kohlensäurediarylestern ein bestimmtes OH/Arylcarbonat-Endgruppenverhältnis im Bereich von OH-Endgruppen > 25 % bis < 50 % eingestellt und dieses so eingestellte Oligocarbonat dann in 2 Minuten bis 150 Minuten zum gewünschten Polycarbonat aufkondensiert wird.

2. Verfahren gemäß Anspruch 1, dadurch gekennzeichnet, daß in 20 Minuten bis 90 Minuten zum Polycarbonat aufkondensiert wird.

3. Verfahren gemäß Anspruch 1, dadurch gekennzeichnet, daß in 30 Minuten bis 60 Minuten zum Polycarbonat aufkondensiert wird.

## Claims

1. Process for the production of thermoplastic aromatic polycarbonate in the melt from an aromatic dihydroxy compound and a carbonic acid diaryl ester, characterised in that the ratio of OH to aryl carbonate terminal groups in the oligocarbonate formed as an intermediate is determined by IR-measurement, a certain ratio of OH to aryl carbonate terminal groups within the range > 25% to < 50% terminal OH groups is subsequently adjusted by replenishing with aromatic dihydroxy compounds or carbonic acid diaryl esters, and the oligocarbonate thus adjusted is then condensed over a period of 2 to 150 minutes to form the required polycarbonate.

2. Process according to Claim 1, characterised in that condensation to form the polycarbonate is carried out over a period of 20 minutes to 90 minutes.

3. Process according to Claim 1, characterised in that condensation to form the polycarbonate is carried out over a period of 30 minutes to 60 minutes.

## Revendications

1. Procédé pour la préparation de polycarbonates thermoplastiques, aromatiques, à l'état de fusion, à partir d'un composé dihydroxy aromatique et d'un ester diarylique d'acide carboxylique, caractérisé en ce que l'on relève par mesure IR le rapport des groupes terminaux OH/carbonate d'aryle pour les oligocarbonates formés de manière

intermédiaire, on ajuste ensuite un certain rapport des groupes terminaux OH/carbonate d'aryle dans le domaine des groupes terminaux OH >25% à <50% par dosage subséquent de composés dihydroxy aromatiques ou d'esters diaryliques d'acides carboxyliques et on condense alors cet oligocarbonate ainsi ajusté en de 2 minutes à 150 minutes en un polycarbonate souhaité.

**2.** Procédé selon la revendication 1, caractérisé en ce que l'on condense en polycarbonate en de 20 minutes à 90 minutes.

**3.** Procédé selon la revendication 1, caractérisé en ce que l'on condense en polycarbonate en de 30 minutes à 60 minutes.